# FASCICULE DE BREVET EUROPEEN

(11) **EP 3 207 219 B1**
(45) Date de publication et mention de la délivrance du brevet: **27.02.2019**
(21) Numéro de dépôt: 15807944.2
(22) Date de dépôt: 12.10.2015
(51) Int. Cl.: F01D 5/30

(54) **PROCÉDÉ D'INTERVENTION SUR UN ROTOR ET CLINQUANT ASSOCIÉ**
VERFAHREN ZUM AUSFÜHREN VON ARBEITEN AN EINEM ROTOR UND ZUGEHÖRIGE FOLIE
METHOD FOR CARRYING OUT WORK ON A ROTOR AND ASSOCIATED FOIL

(30) Priorité: 13.10.2014 FR 1459798
(43) Date de publication de la demande: 23.08.2017
(73) Titulaire: SAFRAN AIRCRAFT ENGINES, 75015 Paris (FR)
(72) Inventeur: DESREUMAUX, Antoine, Patrice, Marie, F-77550 Moissy Cramayel Cedex (FR); REGHEZZA, Patrick, Jean-Louis, F-77550 Moissy Cramayel Cedex (FR)
(74) Mandataire: Pichat, Thierry
(86) Numéro de dépôt international: PCT/FR2015/052746
(87) Numéro de publication internationale: WO 2016/059338

(56) Documents cités:
- EP-A1- 2 642 074
- EP-A2- 0 341 455
- US-A1- 2007 297 908
- US-A1- 2013 074 336

## Description

L'invention se rapporte à un procédé d'intervention qui vise à maintenir opérationnel un rotor de turbomachine a priori aéronautique, tel un tambour de compresseur basse pression.

Sont également concernés les clinquants devant équiper les aubes à considérer de ce rotor et un ensemble comprenant l'aube et le clinquant qui l'équipe en entourant son pied, par-dessous.

La turbomachine privilégiée est un turboréacteur d'avion. Et, dans la présente demande, une direction axiale est définie comme étant une direction parallèle à l'axe de rotation de la soufflante. En outre, l'amont et l'aval d'une pièce sont définis par rapport au sens normal d'écoulement des gaz à l'intérieur du turboréacteur. Et une direction radiale est perpendiculaire à la direction axiale précitée, les termes « intérieur » et « extérieur » étant radialement respectivement plus près et plus loin dudit axe de rotation.

Par ailleurs, le rotor ici à considérer :
- tourne autour d'un axe central, globalement parallèlement auquel peut s'écouler d'amont vers l'aval, entre les aubes de ce rotor, au moins un flux de fluide gazeux,
- et présente en périphérie externe au moins une rainure circonférentielle dans laquelle sont disposées et retenues, entre une face amont et une face aval dressées de limitation de la rainure, lesdites aubes devant être entrainées en rotation autour dudit axe central par le rotor, l'une au moins desdites faces amont et aval présentant des marques en creux en regard de l'une au moins des aubes.

Or, lors de la rotation du rotor considéré, chaque aube se déplace suivant un mouvement axial de va et vient à l'intérieur de son logement et percute répétitivement la ou les faces de limitation de la rainure où elle se trouve. Les percussions répétées des aubes contre les faces en regard de la rainure l'endommagent et diminuent la durée de vie du rotor. On constate généralement la formation, dans la(les) rainure(s), d'empreintes (les des marques en creux ci-avant) qui constituent des zones de départ de fissures, ne serait-ce que potentielles. Ce phénomène est d'autant plus gênant que les rotors, y compris les tambours, sont des pièces relativement coûteuses et dont le remplacement prend du temps.

En effet, en particulier sur les tambours, ces non conformités lors des opérations de maintenance peuvent conduire à des rebuts de pièces car ils sont aujourd'hui non réparables. Le document EP-2557267 décrit un procédé de reconditionnement d'un rotor d'une turbomachine.

Un but de la présente invention est d'apporter une solution pertinente visant à éviter le remplacement systématique et prématuré des pièces concernées, les usures amenant leurs remplacements étant typiquement constatées à partir de la mi-vie de la pièce.

Comme hypothèse de palliatif, il a bien été envisagé un enlèvement local de matière par abrasion (appelé « blending » en anglais) de l'usure dans la portée, mais cette hypothèse entraine une modification des jeux en sommet d'aube et ne permettrait pas de stopper le phénomène l'usure des portées.

Une autre solution a consisté à utiliser des clinquants, qui sont censés être des pièces « anti-usure » interposées entre les pieds d'aubes et le rotor. Toutefois, chaque clinquant continue à se déplacer et percuter répétitivement les faces de limitation de la rainure où il se trouve, y compris dans FR2890684 où les pattes ont tendance à se déplier sous l'effet des forces de poussée qu'exerce sur elles le pied d'aube. Une fois dépliées, lesdites pattes ne jouent plus leur rôle de butée, de sorte que le clinquant n'est plus retenu.

L'invention vise à éviter ces situations inappropriées. Allant à l'encontre des préjugés qui jugent inadaptées les réparations permettant de restaurer les interfaces, car coûteuses en temps et nécessitant une intervention lourde (démontage/remontage) et impliquant un affaiblissement structurel néfaste à la fiabilité et à la tenue ultérieure des aubes, l'invention propose malgré tout :
- la rainure présentant un col de retenue radial des aubes défini entre des rebords, de rectifier à l'écart dudit col la ou les faces qui présente(nt) les marques en creux, jusqu'à effacer ou au moins estomper certaines au moins de ces marques en creux,
- un desdits rebords étant interrompu par une encoche d'introduction des aubes dans la rainure, d'effectuer une reprise de l'encoche à travers laquelle on introduit alors les aubes avec leurs clinquants,
- puis d'interposer des clinquants dans la rainure, entre les aubes et le rotor, au moins là où ladite face a été rectifiée.

Ainsi, on va restaurer la géométrie des portées des rainures ou alvéoles usées au-delà des critères de service. La solution de réparation proposée va restituer la géométrie des portées de la rainure concernée.

A noter en outre qu'en pratique, en particulier sur un tambour, si l'on avait voulu mettre en place un anneau (ou une bande anti-usure) pour compenser la reprise d'usinage, on n'aurait pas su comment l'insérer ni comment le maintenir sur les faces de portée.

Par ailleurs, contrairement à ce à quoi s'attendaient les inventeurs, il s'est aussi avéré qu'il était préférable d'intervenir globalement plutôt que localement. Ainsi est-il conseillé :
- de rectifier, sur l'essentiel au moins de sa circonférence ladite face qui présente les marques en creux,
- puis d'interposer des clinquants dans la rainure, entre toutes les aubes et le rotor.

Ainsi, on évitera un mixage d'aube sans clinquant avec une rainure reprise, ce qui augmenterait le jeu de l'aube dans sa rainure, sans toutefois permettre une éjection de l'aube.

En outre et en pratique, il ne sera pas possible de monter une aube avec clinquant dans un rotor/tambour sans qu'il ait été repris mécaniquement.

Après reprise d'usinage des portées d'alvéoles nécessaire pour éliminer les usures, les volumes de matières travaillant lorsque les aubes sont centrifugées sont réduits. Cependant, en prévoyant donc que l'enlèvement de matière soit tel que le col de la rainure, qui est la section minimale de matière, ne soit pas réduit, seule doit exister une faible augmentation des contraintes ne remettant pas en question la durée de vie du rotor/tambour. Les calculs effectués le montrent et prouvent qu'en multipliant les surfaces de contact, on diminue les pressions de contact et on augmente la durée de vie de la pièce tout en limitant le phénomène d'usure. Les surfaces de contact sont celles de portées d'aubes relativement aux clinquants et celles de portées de clinquants relativement aux alvéoles.

Et pour sécuriser les mises en place et la fiabilité générale de l'intervention, il est même conseillé d'adapter les dimensions des clinquants et de la rainure de façon que :
- avant rectification, il ne soit pas possible de disposer une aube dans la rainure et d'interposer l'un desdits clinquants entre ladite aube et le rotor,
- tandis qu'on pourra effectuer cette disposition et cette interposition après rectification.

Suivant la même approche, il est recommandé de rectifier de manière symétrique les faces amont et aval de limitation de la rainure et d'interposer des clinquants dans la rainure, entre toutes les aubes et le rotor.

Pour la rectification souhaitée, une ou plusieurs passes d'usinage par une fraise de forme seront de préférence réalisées, sur une profondeur inférieure ou égale à l'épaisseur des clinquant et comprise entre 0,1 et 0,3mm. Au moins 0,2mm sera a priori favorable, ceci étant supérieur aux usures habituellement constatées (0,1mm). L'usinage de reprise pourrait être un enlèvement de matière sur 0,3mm.

Concernant maintenant le clinquant en lui-même, favorablement il sera en matière élastiquement déformable et comprendra, sur une même face :
- une partie centrale de liaison de première et deuxième branches latérales dressées, de façon que ladite partie centrale puisse être disposée sous le pied de l'aube considérée et les première et deuxième branches latérales en regard d'une face amont et d'une face aval dudit pied,
- une troisième branche transversale, dressée le long d'une partie d'un premier bord du clinquant qui s'étend entre les première et deuxième branches latérales, de façon à pouvoir être disposée en regard d'une troisième face transversale dudit pied s'étendant entre les faces amont et aval de ce pied,
- et une ou plusieurs excroissances ou crochets situés vers un second bord du clinquant qui s'étend entre les première et deuxième branches latérales, en face du premier bord, pour permettre :
   -- un coulissement de ladite partie centrale de liaison sous le pied de l'aube, sensiblement jusqu'à butée de la troisième branche transversale contre ladite troisième face transversale du pied, après passage élastiquement forcé par-dessus la(les) excroissance(s),
   -- et une certaine retenue dudit clinquant dans cette position, après retour élastique de la(des) excroissance(s) ou crochet(s) en regard d'une quatrième face transversale dudit pied opposée à la troisième face transversale.
Ainsi, la conception du clinquant intègrera t'elle les arrêts axiaux (branches latérales), radiaux (plis à plus de 90°, comme illustré) et transversaux (branche transversale et excroissance(s)), de manière qu'il ne soit pas possible de le perdre, que ce soit en fonctionnement lorsqu'il est centrifugé ou lors de son montage.

L'invention concerne également un ensemble comprenant :
- un rotor de turbomachine tournant autour d'un axe central, et présentant en périphérie externe au moins une rainure circonférentielle dans laquelle sont disposées et retenues, entre une face amont et une face aval dressées de limitation de la rainure, les aubes que le rotor doit entrainer en rotation autour dudit axe central, l'une au moins desdites faces amont et aval étant rectifiée de sorte à présenter des marques en creux estompée présentant des marques en creux, chaque aube présentant un pied par l'intermédiaire duquel l'aube est maintenue dans la rainure,
- et au moins un clinquant du type précité.

De préférence, chaque clinquant sera en tôle, typiquement un inconel, et d'une épaisseur qui pourra être de 0,3mm, donc suffisamment élastique pour épouser la forme du pied et de la rainure.

Ces clinquants apporteront ainsi une tenue à l'usure supérieure au titane et permettront de produire des pièces de faibles épaisseurs suffisamment rigides pour supporter les contraintes de matage à l'interface aube/portée. Ils offriront aussi la possibilité d'adjonction d'un vernis lubrifiant sur les portées des clinquants, ce vernis améliorant les conditions de contact entre l'aube et sa portée, ce contact conditionnant la durée de vie du rotor/tambour.

Les premier, deuxième et troisième branche dressées des clinquants peuvent être chacune liées à la partie centrale de liaison par une pliure.

L'invention sera éventuellement mieux comprise et d'autres détails, caractéristiques et avantages de la présente invention pourront apparaître encore plus clairement à la lecture de la description qui suit, faite à titre d'exemple non limitatif et en référence aux dessins annexés, dans lesquels :
- la figure 1 représente un schéma de turbomachine connue, en coupe axiale,
- la figure 2 est à nouveau un schéma en coupe axiale, mais localement seulement d'une partie du tambour de compresseur basse pression 4,
- la figure 3 est un détail d'une partie de la paroi aval de limitation d'une des rainures du tambour,
- la figure 4 montre cette même partie de rainure, rectifiée, avec une aube et un clinquant à y mettre en place,
- et la figure 5 montre le clinquant, seul.

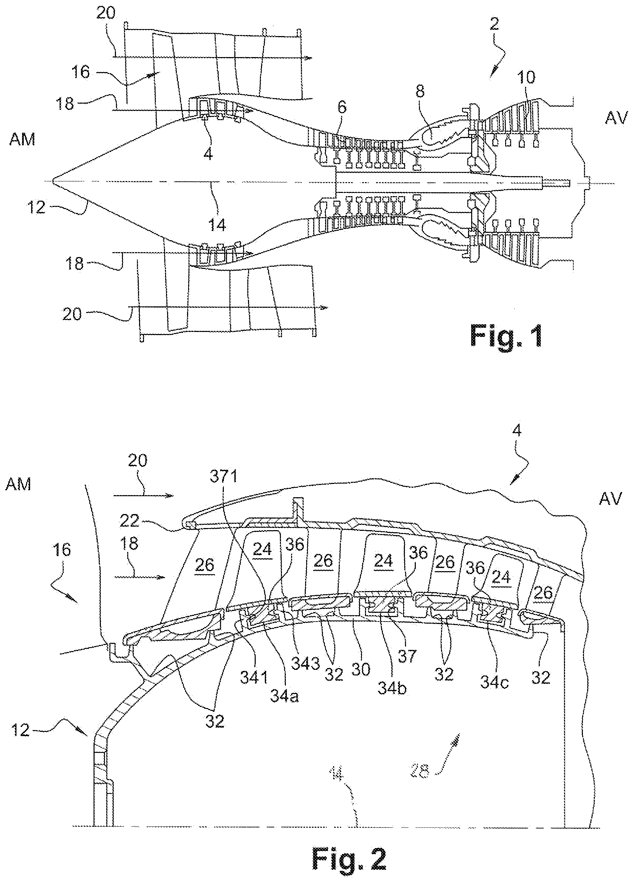

Avant de revenir spécifiquement sur l'invention, les figures 1 et 2 montrent donc son environnement, selon un état connu de la technique issu du document EP2762681, dans le cas où le rotor endommagé et donc à rectifier est un tambour de compresseur basse pression.

Certes, l'invention s'applique, dans les limites précisées, à un autre rotor porteur d'aubes qu'un tambour de compresseur basse pression ; toutefois une telle pièce est spécifique, de par sa position dans le moteur, sa masse, son volume, et donc les contraintes qui la concernent.

La figure 1 montre un turboréacteur 2 double-flux. Le turboréacteur 2 comprend axialement, d'amont (AM) en aval (AV), successivement un compresseur basse-pression 4, un compresseur haute-pression 6, une chambre de combustion 8 et un ou plusieurs étages de turbines 10. En fonctionnement, la puissance mécanique de la turbine 10 transmise via l'arbre central jusqu'au rotor 12 met en mouvement les deux compresseurs 4 et 6. La rotation du rotor 12 autour de son axe de rotation 14 permet de générer un débit d'air et de comprimer progressivement ce dernier jusqu'à l'entrée de la chambre de combustion 10. Un ventilateur d'entrée (fan) 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine

Le compresseur basse-pression 4 schématisé figure 2 montre une partie du fan 16 et le bec de séparation 22 des flux primaire 18 et secondaire 20. Le rotor 12 comprend plusieurs rangées circonférentielles d'aubes de rotor 24 et plusieurs redresseurs qui contiennent, chacun, une rangée d'aubes de stator 26. Les redresseurs sont associés au fan 16 ou à une rangée d'aubes de rotor 24 pour redresser le flux d'air. Les aubes de rotor 24 s'étendent essentiellement radialement depuis le rotor 12.

Le rotor 12 comprend un tambour 28. Le tambour 28 comporte une paroi 30 avec un profil de révolution autour de l'axe de rotation 14, en quelque sorte comme un cylindre ventru. Le profil de révolution de la paroi 30 suit radialement la variation de section de la surface intérieure du flux primaire.

Le tambour 28 peut comprendre des léchettes 32 typiquement destinées à coopérer par abrasion avec des couches annulaires de matériau abradable de sorte à assurer une étanchéité.

Par ailleurs, ce tambour 28, qui est ici métallique, tourne autour de l'axe central 14, globalement parallèlement auquel peut donc s'écouler d'amont vers l'aval, entre les aubes 24 d'une même rangée, le flux gazeux considéré.

Et il présente en périphérie externe, en face de chaque rangée d'aubes de rotor 24, une rainure circonférentielle s'étendant autour de l'axe 14 et référencée 34a, 34b ou 34c, suivant la rangée à laquelle on s'intéresse figure 2.

Dans chaque rainure circonférentielle sont disposées et retenues, entre une face (ou paroi interne) amont et une face (ou paroi interne) aval dressées (telles respectivement 341 et 343 pour la rainure 34a) de limitation de la rainure, les aubes de rotor 24 d'une des séries.

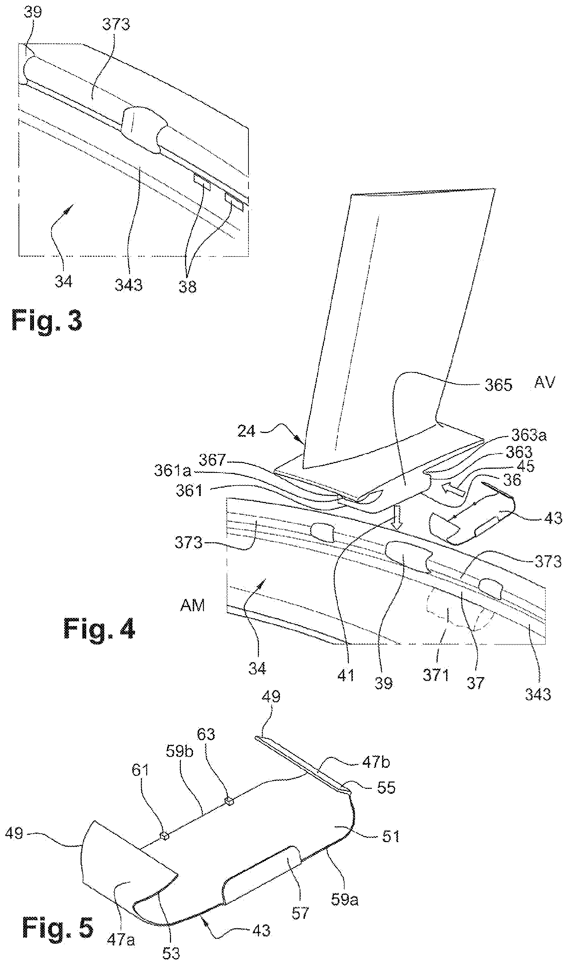

Pour cela, chaque aube 24 présente un pied 36 ayant une face amont 361 et une face aval 363 (figure 4) faisant face respectivement aux faces amont et aval 341 et 343 de la rainure concernée (figure 2). Et les faces amont 361 et aval 363 présentent chacune un creux, respectivement 361a et 363a figure 5 où sont engagés des rebords circonférentiels respectifs, amont et aval, 371, 373 (figures 2,4) des parois 341 et 343.

Figure 4, on voit en outre que, sur sa circonférence, le rebord considéré, ici 373, est interrompu en au moins un endroit (tel 39) pour permette d'y faire passer sensiblement radialement chaque pied d'aube à engager dans la rainure (flèche 41), après quoi l'aube 24 est glissée jusqu'à son secteur, dans la rainure. Une fois ainsi en place, les aubes sont retenues radialement par l'étroitesse du col 37 entre les rebords 371,373.

Comme déjà expliqué, un problème est que, compresseur en fonctionnement, le mouvement, même limité, sensiblement axial des aubes 24 en place induit, en regard de certaines au moins de ces aubes, des marques en creux dans certaines au moins des parois internes 341 et 343 de certaines au moins des rainures circonférentielles, telles les marques 38 dans la paroi 343 figure 3.

Aussi est-il proposé, pour surmonter cet inconvénient :
- d'une part de prévoir de rectifier la face qui présente ces marques en creux 38, de sorte à effacer ou au moins estomper certaines au moins de ces marques d'usures,
- et d'autre part, d'interposer des clinquants 43 dans la rainure 34 concernée, entre les pieds d'aubes 36 et les parois internes 341, 343, au moins là où ladite face a été rectifiée.

Figure 4, on remarque d'ailleurs que les marques 38 ont disparu. A supposer que les faces de pression 341, 343 (dites aussi faces de portée) en soient porteuses, la rectification a été réalisée par usinage annulaire, sur ces faces.

Sur le sujet, il est même recommandé de rectifier de manière symétrique ces parois internes 341, 343 de limitation de la rainure, puis d'intervenir pour que des clinquants 43 soient en place entre toutes les aubes et lesdites parois de la rainure en cause.

L'usinage des rainures du tambour a pu en particulier être effectué par une fraise de forme, qui est un outil du même type que celui utilisé lors de la fabrication initiale du tambour 28 de compresseur, lequel sera typiquement à base de titane.

Ainsi, on aura rectifié sur l'essentiel au moins de sa circonférence chaque face qui présente les marques en creux, la reprise d'usinage mécanique étant au moins sectorielle et de préférence sensiblement annulaire, sur les pans intérieurs de portée en dépouille précités.

Une fois ceci effectué, on va en fait et de préférence pourvoir de clinquants 43 toutes les aubes 24 au moins de la série considérée, comme le schématise le flèche 45 figure 4, avant d'engager le tout dans la rainure en cause.

Entretemps, on aura aussi a priori réalisé une reprise de l'encoche 39 d'introduction des aubes, pour tenir compte de la présence du clinquant 43 que l'on présente plus en détail ci-après.

Ainsi, on aura rétabli une géométrie optimisée de portées de rainure et comblé le jeu entres les portées des pieds d'aubes mobiles et les portées de la rainure du tambour.

Deux autres points importants ont pu être pris en compte : la maîtrise de l'augmentation des contraintes dans la/les rainures, suite à la retouche, et le montage et l'interchangeabilité du tambour équipé.

Concernant le premier, après reprise d'usinage desdites portées de rainure nécessaire pour éliminer les usures, les volumes de matière travaillant lorsque les aubes 24 sont centrifugées sont réduits. Cependant l'enlèvement de matière a été conçu de telle sorte que le col 37, qui est donc la section minimale de matière, ne soit pas réduit. De fait, des calculs montrent une faible augmentation des contraintes ne remettant pas en question la durée de vie du tambour 28.

Concernant le second, pour éviter un mixage d'aube 24 sans clinquant avec une rainure 34 reprise (ce qui augmenterait le jeu de l'aube dans sa rainure, sans toutefois permettre une éjection de l'aube), un marquage peut être ajouté sur le tambour de manière à indiquer à l'opérateur que toutes les aubes du tambour doivent recevoir un clinquant. Et, ainsi il ne sera pas possible de monter une aube avec clinquant dans un tambour sans qu'il ait été repris mécaniquement.

De fait, il sera donc conseillé que de rectifier à l'écart dudit col 37 la ou les faces qui présente(nt) les marques en creux.

Et il est recommandé par ailleurs d'adapter les dimensions relatives des clinquants et de la rainure de façon:
- qu'avant rectification, il ne soit pas possible de disposer un pied 36 d'aube pourvu de son clinquant 43 dans la rainure 34 brut (figure 3),
- tandis qu'on pourra effectuer cette disposition après rectification (figure 4).

La figure 5 montre plus nettement que la figure 4 le clinquant 43 dont on privilégie l'utilisation, pour ce pied (étant précisé que le présent procédé d'intervention pourrait s'appliquer à une autre forme de pied d'aube).

Le clinquant 43 est une plaque en matière relativement élastiquement déformable. Plutôt qu'en composite (par exemple vespel ; marque déposée), le matériau utilisé sera de préférence un inconel qui apporte une tenue à l'usure supérieure au titane et permet de produire des clinquants de faibles épaisseurs suffisamment rigides pour supporter les contraintes de matage à l'interface aube/portée dans la rainure. Il offre aussi la possibilité d'adjonction d'un vernis de surface lubrifiant sur les portées latérales 47a, 47b du clinquant, ce vernis améliorant les conditions de contact entre l'aube et sa portée, ce contact conditionnant la durée de vie du tambour. Le vernis 49 de surface lubrifiant pourra être du bisulfure de molybdène, tel que celui actuellement déposé sur des aubes de fan, ou un produit fournissant des caractéristiques similaires et répondant aux nouvelles normes qualifiées « REACH ».

Le clinquant 43 comprend, sur une même face (la face radialement extérieure) :
- une partie centrale 51 de liaison de première et deuxième branches latérales 53, 55 dressées, de façon que ladite partie centrale puisse être disposée sous le pied 45 de l'aube et les première et deuxième branches latérales en regard respectivement des faces amont 361 et aval 363 dudit pied,
- une troisième branche 57, transversale, dressée le long d'une partie d'un premier bord 59a du clinquant qui s'étend entre les première et deuxième branches latérales 53, 55, de façon à pouvoir être disposée en regard d'une troisième face 365, transversale, dudit pied (qui s'étend donc entre les faces amont et aval 361, 363 de ce pied,
- et une ou plusieurs (ici deux) excroissances, bourrelets ou crochets 61, 63 situés vers un second bord 59b (transversal) du clinquant qui s'étend entre les première et deuxième branches latérales 53,55, en face du premier bord 59a.

Ainsi, ce clinquant permettra :
- qu'il puisse coulisser (flèche 45) de sorte que sa partie centrale 51 vienne sous le pied 36 de l'aube, sensiblement jusqu'à butée de la troisième branche latérale 57 contre ladite troisième face transversale 365, après donc un passage élastiquement forcé par-dessus la(les) excroissance(s) 61,63,
- qu'il y ait alors une certaine retenue du clinquant dans cette position, après retour élastique de la(des) excroissance(s) ou crochet(s) 61, 63, en regard de la quatrième face transversale dudit pied (face 367 cachée figure 4) opposée à la troisième face 365,
- et que ce clinquant en place sous le pied 36 de son aube puisse être disposé avec elle dans la rainure, pour participer à son maintien en place, dans cette rainure.

De préférence, pour allier résistance, flexibilité, facilité de fabrication, les première deuxième et troisième branches dressées 53, 55 ,57 seront chacune liées à la partie centrale de liaison 51 par une pliure.

Globalement, en termes d'avantages de la solution présentée ci-avant, on peut lister ce qui suit :
- restauration de la surface de contact : contrairement au toilage connu, le clinquant permet de restituer une surface de contact conforme aux conditions de certification. Par conséquent la répartition des efforts passant par les portées de la rainure s'opère de manière homogène ;
- pas de modification du jeu en sommet d'aube : la restauration de la géométrie de l'ensemble tambour/aubes (roues) mobiles permet de garder le jeu optimal en sommet d'aube, ce jeu conditionnant les performances du moteur et la tenue mécanique des aubes ;

- profondeur d'usure couverte importante : les profondeurs d'usures typiquement observées ne dépassent pas 0,1mm. La réparation présentée ci-dessus couvre toutes les usures jusqu'à 0,2mm, voire 0,3mm ;
- diminution de la vitesse d'usure : le matériau utilisé avec le dépôt de vernis complémentaire permet de diminuer la vitesse d'usure des portées du tambour ;
- équilibrage : pas d'introduction de balourd si reprise mécanique symétrique et toutes les aubes sont équipées de clinquants ;
- facilement remplaçable : si de l'usure apparaît sur un clinquant, il est facile de le démonter et de le remplacer ;
- sécurité dite « de Murphy » (Murphy proof) : elle est assurée par étage et entres les étages, la conception de chaque clinquant évite tout montage dans un sens contraire à la position de conception ;
- aspect financier : le prix d'un tambour neuf est élevé, sans compter la perte due au temps d'intervention et de blocage au sol du moteur. Le clinquant étant une pièce standard et la reprise mécanique une opération commune de réparation, le coût de la réparation sera très faible devant le remplacement complet du tambour.

## Revendications

1. Procédé d'intervention pour maintenir dans un état opérationnel un rotor (28) de turbomachine :
- tournant autour d'un axe central (14), globalement parallèlement auquel peut s'écouler d'amont vers l'aval, entre des aubes (24), au moins un flux de fluide gazeux,
- et présentant en périphérie externe au moins une rainure circonférentielle (34) dans laquelle sont disposées et retenues, entre une face amont et une face aval (341,343) dressées de limitation de la rainure, lesdites aubes devant être entrainées en rotation autour dudit axe central par ledit rotor, l'une au moins desdites faces amont et aval présentant des marques en creux (38) en regard de l'une au moins des aubes,
**caractérisé en ce que** :
- la rainure présentant un col (37) de retenue radial des aubes défini entre des rebords (371,373), on rectifie à l'écart dudit col la ou les faces (341,343) qui présente(nt) les marques en creux (38) jusqu'à effacer ou au moins estomper certaines au moins de ces marques en creux,
- un desdits rebords (373) étant interrompu par une encoche (39) d'introduction des aubes dans la rainure, on effectue une reprise de l'encoche à travers laquelle on introduit alors les aubes avec leurs clinquants (43),
- et on interpose des clinquants (43) dans la rainure (34), entre les aubes et le rotor (28), au moins là où ladite face a été rectifiée.

2. Procédé selon la revendication 1, dans lequel:
- on rectifie sur l'essentiel au moins de sa circonférence ladite face (341,343) qui présente les marques en creux,
- et on interpose des clinquants (43) dans la rainure, entre toutes les aubes (24) et le rotor.

3. Procédé selon la revendication 1 ou 2, dans lequel ladite face (341,343) qui présente les marques en creux (38) et que l'on rectifie appartient à un tambour (28) de compresseur basse pression.

4. Procédé selon l'une des revendications précédentes, dans lequel on adapte les dimensions des clinquants (43) et de la rainure (34) de façon que :
- avant rectification, il n'est pas possible de disposer une aube (24) dans la rainure et d'interposer l'un desdits clinquants entre ladite aube et le rotor,
- tandis qu'on effectue cette disposition et interposition après rectification.

5. Procédé selon l'une des revendications précédentes, dans lequel on rectifie de manière symétrique les faces amont et aval (341,343) de limitation de la rainure et on interpose des clinquants dans la rainure, entre toutes les aubes et le rotor.

6. Procédé selon l'une des revendications précédentes, dans lequel on rectifie sur une profondeur comprise entre 0.1 et 0.3 mm, inférieure ou égale à l'épaisseur des clinquants (43).

7. Clinquant en matière élastiquement déformable, en particulier pour la mise en oeuvre du procédé selon l'une des revendications précédentes, dans lequel chaque aube (24) présente un pied (36) par l'intermédiaire duquel l'aube est maintenue dans la rainure (34), le clinquant (43) comprenant, sur une même face :
- une partie centrale (51) de liaison de première et deuxième branches latérales (53,55) dressées, de façon que ladite partie centrale puisse être disposée sous le pied de l'aube et les première et deuxième branches latérales en regard d'une face amont (361) et d'une face aval (363) dudit pied,
- une troisième branche transversale (57), dressée le long d'une partie d'un premier bord du clinquant qui s'étend entre les première et deuxième branches latérales (53,55), de façon à pouvoir être disposée en regard d'une troisième face (365) transversale dudit pied s'étendant entre les faces amont et aval de ce pied,
- et une ou plusieurs excroissances ou crochets (61,63) situés vers un second bord du clinquant qui s'étend entre les première et deuxième branches latérales (53,55), en face du premier bord, pour permettre :
-- un coulissement de ladite partie centrale de liaison sous le pied de l'aube, sensiblement jusqu'à butée de la troisième branche latérale contre ladite troisième face transversale du pied, après passage élastiquement forcé par-dessus la(les) excroissance(s),
-- et une certaine retenue dudit clinquant dans cette position, après retour élastique de la(des) excroissance(s) ou crochet(s) (61,63) en regard d'une quatrième face transversale (367) dudit pied opposée à la troisième face transversale.

8. Clinquant selon la revendication 7, dans lequel les première deuxième et troisième branches dressées (53,55,57) sont chacune liées à la partie centrale de liaison par une pliure.

9. Ensemble comprenant :
- un rotor (28) de turbomachine :
-- tournant autour d'un axe central (14),
-- et présentant en périphérie externe au moins une rainure circonférentielle (34) dans laquelle sont disposées, entre une face amont et une face aval (341,343) dressées de limitation de la rainure, des aubes du rotor, la rainure présentant un col (37) de retenue radial desdites aubes défini entre des rebords (371,373) dont l'un (373) est interrompu par une encoche (39) d'introduction des aubes dans la rainure, l'une au moins desdites faces amont et aval étant rectifiée de sorte à présenter des marques en creux (38) estompée présentant des marques en creux (38), chaque aube (24) présentant un pied (36) par l'intermédiaire duquel l'aube est maintenue dans la rainure (34),
- le clinquant selon la revendication 7 ou 8,
- et une dite aube dont le clinquant (43) entoure le pied (36), par-dessous.

## Patentansprüche

1. Interventionsverfahren zum Halten eines Turbomaschinenrotors (28) in einem betriebsbereiten Zustand,
- welcher Rotor um eine Mittelachse (14) dreht, zu welcher parallel zumindest ein gasförmiger Fluidstrom von stromaufwärts nach stromabwärts zwischen Schaufeln (24) strömen kann,
- und am Außenumfang zumindest eine umlaufende Nut (34) aufweist, in welcher zwischen einer aufgestellten vorderen Seite und einer aufgestellten hinteren Seite (341, 343) zum Begrenzen der Nut die Schaufeln angeordnet und gehalten sind, die von dem Rotor um die Mittelachse drehend mitgenommen werden sollen, wobei zumindest eine aus vorderer Seite und hinterer Seite vertiefte Markierungen (38) aufweist, die zumindest einer der Schaufeln gegenüberliegen,
**dadurch gekennzeichnet, dass**:
- die Nut einen Kragen (37) zum radialen Halten der Schaufeln aufweist, der zwischen Randleisten (371, 373) definiert ist, wobei im Abstand von dem Kragen die Seite bzw. Seiten (341, 343), die die vertieften Markierungen (38) aufweist/aufweisen, geschliffen wird/werden, bis zumindest einige dieser Vertiefungen beseitigt oder zumindest geschwunden sind,
- eine der Randleisten (373) durch eine Kerbe (39) zum Einführen der Schaufeln in die Nut unterbrochen ist, wobei eine Nachbearbeitung der Kerbe erfolgt, durch welche dann die Schaufeln mit ihren Zwischenstücken (43) eingeführt werden,
- und Zwischenstücke (43) in die Nut (34) zwischen den Schaufeln und dem Rotor (28) zumindest dort eingesetzt werden, wo die Seite geschliffen wurde.

2. Verfahren nach Anspruch 1, wobei:
- die die vertieften Markierungen aufweisende Seite (341, 343) zumindest über den wesentlichen Teil ihres Umfangs geschliffen wird,
- und Zwischenstücke (43) in die Nut zwischen sämtlichen Schaufeln (24) und dem Rotor eingesetzt werden.

3. Verfahren nach Anspruch 1 oder 2, wobei die die vertieften Markierungen aufweisende Seite (341, 343), die geschliffen wird, zu einer Trommel (28) eines Niederdruckverdichters gehört.

4. Verfahren nach einem der vorangehenden Ansprüche, wobei die Abmessungen der Zwischenstücke (43) und der Nut (34) derart angepasst werden, dass:
- vor dem Schleifen es nicht möglich ist, eine Schaufel (24) in der Nut anzuordnen und eines der Zwischenstücke zwischen Schaufel und Rotor einzusetzen,
- wohingegen nach dem Schleifen dieses Anordnen und Einsetzen erfolgt.

5. Verfahren nach einem der vorangehenden Ansprüche, wobei die vordere und die hintere Seite (341, 343) zum Begrenzen der Nut symmetrisch geschliffen werden und Zwischenstücke in die Nut zwischen sämtlichen Schaufeln und dem Rotor eingesetzt werden.

6. Verfahren nach einem der vorangehenden Ansprüche, wobei über eine Tiefe zwischen 0,1 und 0,3 mm geschliffen wird, die geringer oder gleich der Dicke der Zwischenstücke (43) ist.

7. Zwischenstück aus elastisch verformbarem Material, insbesondere zum Durchführen des Verfahrens nach einem der vorangehenden Ansprüche, wobei jede Schaufel (34) einen Schaufelfuß (36) aufweist, über welchen die Schaufel in der Nut (34) gehalten wird, wobei das Zwischenstück (43) auf einer gleichen Seite enthält:
- ein Mittelteil (51) zum Verbinden eines aufgestellten ersten und zweiten Seitenschenkels (53, 55), so dass das Mittelteil unter dem Schaufelfuß angeordnet werden kann und der erste und der zweite Seitenschenkel einer vorderen Seite (361) und einer hinteren Seite (363) des Schaufelfußes gegenüberliegen,
- einen quer verlaufenden dritten Schenkel (57), der entlang eines Teils eines ersten Randes des Zwischenstücks aufgestellt ist, der sich zwischen dem ersten und dem zweiten Seitenschenkel (53, 55) erstreckt, so dass er einer quer verlaufenden dritten Seite (365) des Schaufelfußes gegenüberliegend angeordnet werden kann, die sich zwischen der vorderen Seite und der hinteren Seite dieses Schaufelfußes erstreckt,
- und einen oder mehrere Vorsprünge bzw. Haken (61, 63), die zu einem zweiten Rand des Zwischenstücks hin liegen, der sich zwischen dem ersten und dem zweiten Seitenschenkel (53, 55), dem ersten Rand gegenüberliegend, erstreckt, um zu gestatten:
-- eine Gleitbewegung des Verbindungsmittelteils unter den Schaufelfuß im Wesentlichen bis zum Anschlag des dritten Seitenschenkels an die quer verlaufende dritte Seite des Schaufelfußes nach federbeaufschlagtem Überschreiten des Vorsprungs bzw. der Vorsprünge,
-- und einen gewissen Halt des Zwischenstücks in dieser Position nach Rückfederung des Vorsprungs bzw. Hakens bzw. der Vorsprünge bzw. Haken (61, 63) gegenüber einer quer verlaufenden vierten Seite (367) des Schaufelfußes, die der quer verlaufenden dritten Seite entgegengesetzt ist.

8. Zwischenstück nach Anspruch 7, wobei der erste, der zweite und der dritte aufgestellte Schenkel (53, 55, 57) jeweils durch eine Abkantung mit dem Verbindungsmittelteil verbunden sind.

9. Einheit, enthaltend:
- einen Turbomaschinenrotor (28), der:
-- sich um eine Mittelachse (14) dreht,
-- und am Außenumfang zumindest eine umlaufende Nut (34) aufweist, in welcher zwischen einer aufgestellten vorderen Seite und einer aufgestellten hinteren Seite (341, 343) zum Begrenzen der Nut Rotorschaufeln angeordnet sind, wobei die Nut einen Kragen (37) zum radialen Halten der Schaufeln aufweist, der zwischen Randleisten (371, 373) definiert ist, von denen eine durch eine Kerbe (39) zum Einführen der Schaufeln in die Nut unterbrochen ist, wobei zumindest eine aus vorderer und hinterer Seite so geschliffen ist, dass sie vertiefte Markierungen (38) aufweist, bzw. geschwunden ist und vertiefte Markierungen (38) aufweist, wobei jede Schaufel (24) einen Schaufelfuß (36) aufweist, über welchen die Schaufel in der Nut (34) gehalten wird,
- das Zwischenstück nach Anspruch 7 oder 8,
- und eine Schaufel, deren Zwischenstück (43) den Schaufelfuß (36) von unten umgreift.

## Claims

1. A method for carrying out work in order to maintain in an operational state a rotor (28) of a turbomachine:
- which rotates about a central axis (14) generally parallel to which can flow, from upstream to downstream between blades (24), at least one gaseous fluid stream,
- and the outer periphery of which has at least one circumferential groove (34), wherein said blades, to be rotated about said central axis by said rotor, are placed and retained between an upstream face and a downstream face (341, 343) in an upright position at the groove boundary, with at least one of said upstream and downstream faces having recessed marks (38) located opposite at least one of the blades,
**characterized in that**:
- as the groove has a radial neck (37) for retaining the blades defined between rims (371, 373), said face(s) (341, 343) which has/have recessed marks (38) is/are ground at some distance from the neck so as to erase or at least blur at least some of such recessed marks,
- as one of said rims (373) is interrupted by a notch (39) for introducing the blades into the groove, the notch through which the blades are then introduced with their foils (43) is reworked,
- and foils (43) are placed in the groove (34), between the blades and the rotor (28), at least in the area where said face has been ground.

2. A method according to claim 1, wherein:
- said face (341, 343) is ground on at least the main portion of its circumference which has the recessed marks,
- and foils (43) are placed in the groove, between all the blades (24) and the rotor.

3. A method according to claim 1 or 2, wherein said face (341, 343) which has the recessed marks (38) and which is ground belongs to a low-pressure compressor drum (28).

4. A method according to one of the preceding claims, wherein the dimensions of the foils (43) and the groove (34) are adapted so that:
- prior to grinding, a blade (24) cannot be positioned in the groove and one of said foils cannot be placed between said blade and the rotor,
- whereas such positioning and placing are possible after grinding.

5. A method according to one of the preceding claims, wherein the upstream and downstream faces (341, 343) at the groove boundary are symmetrically ground, and foils are placed in the groove, between all the blades and the rotor.

6. A method according to one of the preceding claims, wherein grinding is carried out to a depth ranging from 0.1 to 0.3mm, smaller than or equal to the thickness of the foils (43).

7. A foil made of an elastically deformable material, in particular for implementing the method according to one of the preceding claims, wherein each blade (24) has a root (36) through which the blade is maintained in the groove (34), with the foil (43) comprising, on a common face:
- a central portion (51) connecting the first and second upright side branches (53,55), so that said central part can be positioned under the blade root and the first and second side branches being opposite an upstream face (361) and a downstream face (363) of said root,
- a third transverse branch (57), positioned upright along a portion of a first edge of the foil which extends between the first and second side branches (53, 55) so as to be positioned opposite of a third transverse face (365) of said root which extends between the upstream and downstream faces of said root,
- and one or more protrusions or hooks (61, 63) located towards a second edge of the foil which extends between the first and second side branches (53, 55), opposite the first edge, to enable:
- a sliding of said central connecting portion under the blade root, substantially up to the third side branch abutting against said third transverse face of the root, after a resiliently forced passage over the protrusion(s),
- and some holding of said foil in this position after a resilient return of the protrusion(s) or hook(s) (61, 63) opposite a fourth transverse surface (367) of said root opposite the third transverse face.

8. A foil according to claim 7, wherein the first, second and third upright branches (53, 55, 57) are each connected to the central connecting portion by a fold.

9. An assembly comprising:
- a rotor (28) of a turbine engine:
- rotating about a central axis (14),
- and an outer periphery of which has at least one circumferential groove (34), wherein rotor blades are placed and retained between an upstream face and a downstream face (341, 343), in an upright position at a groove boundary, with the groove having a radial neck (37) for retaining the blades defined between rims (371, 373), one of said rims (373) being interrupted by a notch (39) for introducing the blades into the groove, with at least one of said upstream and downstream faces being ground so as to have blurred recessed marks (38) presenting recess marks (38), with each blade (24) having a root (36) through which the blade is maintained in the groove (34),
- the foil according to claim 7 or 8,
- and one said blade, the foil (43) of which surrounds the root (36) from below.
